# DEMANDE DE BREVET EUROPEEN

(11) **EP 1 017 219 A1**
(43) Date de publication de la demande: **05.07.2000**
(21) Numéro de dépôt: 99403080.7
(22) Date de dépôt: 08.12.1999
(51) Int. Cl.: H04M 17/02, H04M 17/00, G06K 7/00

(54) **Procédé de détection de fraude des cartes à circuit électronique utilisées en téléphonie**

(30) Priorité: 30.12.1998 FR 9816686
(71) Demandeur: SCHLUMBERGER Systèmes, 92120 Montrouge (FR)
(72) Inventeur: Barakat, M. Simon, 91290 Saint Germain les Arpajon (FR); Cornic, Sandrine, 94260 Fresnes (FR)

(57) **Abrégé**

Procédé de détection de fraude d'une carte (10) à circuit électronique synchrone présentant un temps de mise sous tension donné.

Selon l'invention, ledit procédé consiste à appliquer au circuit électronique (11) de ladite carte (10), dès sa mise sous tension, un signal (si) d'excitation donné, à enregistrer un motif (M) de réponse fourni par le circuit (11), à comparer ledit motif (M) de réponse à un motif (Mo) de référence correspondant à la réponse attendue du circuit électronique (11) audit signal (si) d'excitation, et à conclure à la fraude en cas de comparaison négative.

Application à la lutte contre la fraude aux télécartes.

## Description

La présente invention concerne un procédé de détection de fraude d'une carte à circuit électronique.

L'invention trouve une application particulièrement avantageuse dans la lutte contre la fraude aux communications établies depuis un appareil téléphonique, notamment mais non exclusivement un appareil téléphonique public.

Les cartes utilisées en téléphonie publique, appelées aussi télécartes, sont généralement des cartes à circuit éléctronique dit synchrone, dans lequel le signal de sortie est une fonction à base de logique combinatoire ou séquentielle, d'une combinaison ou d'un séquencement d'un ou plusieurs signaux d'entrée. Les circuits synchrones exigent avant d'être opérationnels un temps de mise sous tension de l'ordre de 500ns par exemple.

La vulgarisation de la technologie des cartes à circuit électronique dans les revues électroniques de grande diffusion, ainsi que dans les établissements d'enseignement technique, a largement contribué à la tentation d'utilisation frauduleuse des appareils téléphoniques par émulation des cartes à circuit électronique, c'est-à-dire les télécartes prévues pour fonctionner avec lesdits appareils téléphoniques. De plus, la large commercialisation des composants de grande technicité, comme les microprocesseurs programmables, et la facilité de leur utilisation acquise auprès de laboratoires d'écoles ou de programmeurs de microprocesseurs, laissent prévoir une augmentation de ce type de fraude.

Il existe en particulier des simulateurs de télécartes à logique programmée, dits simulateurs actifs, qui sont des dispositifs à circuit électronique asynchrone, comprenant essentiellement un microcontrôleur programmable associé à quelques composants passifs (résistances, capacités). Au moyen d'un programme interne, le microcontrôleur simule le comportement d'une télécarte. Ce type de composants est maintenant bien répandu sur le marché grand public, de même que leurs outils de mise au point et de programmation, notamment logiciels fonctionnant sur des ordinateurs personnels.

D'une manière générale, la fraude à la télécarte consiste à relier le simulateur actif aux zones de contact électrique du circuit électronique de la carte par l'intermédiaire de fils de connexion, de manière à connecter le simulateur à l'électronique de l'appareil téléphonique. Afin de détecter ce type de fraude, on peut munir l'appareil téléphonique d'un dispositif spécifique connu sous le nom de DCE pour Détecteur de Connexion Externe. Ce dispositif de détection est principalement apte à recouvrir les fils de connexion reliant le simulateur aux zones de contact. En l'absence de fils de connexion frauduleuse, la seule capacité électrique présente entre la carte et ladite électrode est une capacité Co due à l'environnement de la carte et de l'électronique. Par contre, la présence de fils de connexion frauduleuse crée une capacité répartie C1 entre l'électrode plane et les contacts du terminal du publiphone. Le principe d'un DCE est donc de détecter l'augmentation de capacité de Co à Co + C1 lors de l'introduction d'une télécarte sur laquelle auront été rapportés des fils de connexion à un simulateur.

La détection par DCE a l'inconvénient d'une dérive en température et en humidité de la capacité parasite C1, ce qui pour obtenir de meilleures performances en nombre de fils à détecter, nécessite une correction automatique, matérielle, ou semi-automatique, logicielle. Il y a alors avantage à avoir recours à un montage différentiel pour annuler les effets de cette dérivée de capacité parasite.

C'est précisément pour éviter l'inconvénient précité en regard des simulateurs actifs à circuit asynchrone que l'invention propose un procédé de détection de fraude d'une carte à circuit électronique synchrone présentant un temps de mise sous tension donné, remarquable en ce que ledit procédé consiste à appliquer audit circuit électronique, dès sa mise sous tension, un signal d'excitation donné, à enregistrer un motif de réponse fourni par le circuit, à comparer ledit motif de réponse à un motif de référence correspondant à la réponse attendue du circuit électronique audit signal d'excitation, et à conclure à la fraude en cas de comparaison négative.

Comme on le verra en détail plus loin, le procédé de l'invention permet de détecter la présence frauduleuse d'un simulateur actif de télécartes en exploitant le fait que la simulation d'une télécarte par un circuit électronique asynchrone ne peut se faire qu'après un certain temps suivant la mise sous tension du circuit. Ce temps minimum est de nature complexe mais n'est jamais inférieur à 10ms. On comprend alors que si, lorsqu'une carte, authentique ou frauduleuse du type actif, est introduite dans le lecteur d'un publiphone par exemple et qu'une tension d'alimentation lui est fournie par ledit lecteur, un signal d'excitation donné est appliqué à l'entrée du circuit de la carte présente dans le lecteur au bout d'un temps égal ou légèrement supérieur au temps de mise sous tension d'un circuit synchrone pour pouvoir fonctionner, le motif de la réponse fournie par le circuit sera le motif de référence attendu dans le cas d'une carte authentique, tandis que dans le cas d'une carte frauduleuse à circuit asynchrone, le motif de réponse sera complètement erratique puisque le circuit n'est pas encore apte à fonctionner, d'où le diagnostic de fraude.

La description qui va suivre en regard des dessins annexés, donnés à titre d'exemples non limitatifs, fera bien comprendre en quoi consiste l'invention et comment elle peut être réalisée.

La figure 1 est un schéma d'un dispositif de détection de fraude d'un simulateur actif de carte à circuit électronique.

La figure 2a est un digramme montrant la mise sous tension d'un circuit synchrone.

La figure 2b est un diagramme montrant la mise sous tension d'un circuit asynchrone

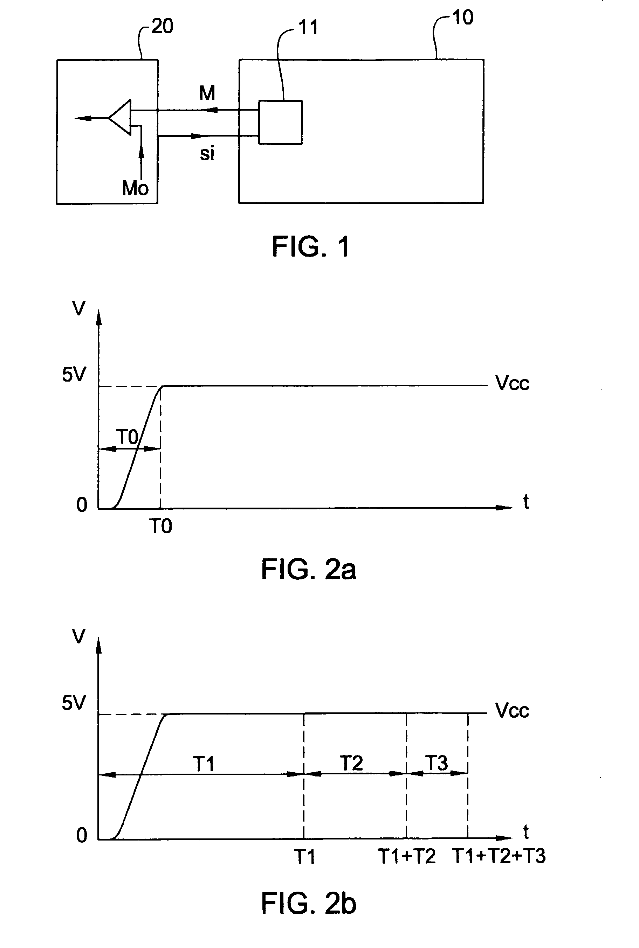

Sur la figure 1 est représentée une carte 10 destinée à être utilisée dans un appareil téléphonique, un publiphone par exemple, par insertion de ladite carte dans un lecteur 20. Lorsque la carte 10 est introduite dans le lecteur 20, les contacts électriques du circuit électronique 11 de la carte sont mis en laison avec un connecteur (non représenté) du lecteur de manière, d'une part, à alimenter le circuit électronique 11, et, d'autre part, à échanger des informations avec ledit circuit.

La carte 10 peut être soit authentique, soit frauduleuse.

Dans le cas d'une carte authentique, il s'agit d'une télécarte à simple mémoire électronique laquelle se comporte comme un circuit synchrone à logique câblée. Comme le montre la figure 2a, un circuit synchrone est prêt à fonctionner suite à sa mise sous tension après un retard qui ne dépend que du temps T0 dit de montée des alimentations et au dépassement des seuils de différentiation des niveaux logiques bas (niveau 0) et haut (niveau 1). Ce temps T0 de mise sous tension est généralement de l'ordre de 500ns.

Dans le cas d'une carte frauduleuse, il s'agit d'un simulateur à logique programmée comportant un circuit asynchrone, notamment un microcontrôleur associé a des mémoires de type ROM ou RAM. Le temps de mise sous tension, montré à la figure 2b, dépend de plusieurs facteurs:
■ le temps dit de "reset" qui caractérise l'attente minimale nécessaire pour stabiliser l'oscillateur local afin d'obtenir une horloge régulière (temps T1) et à initialiser la logique interne du circuit (registres, compteurs de programmes, etc) (temps T2). Le temps de "reset" total T1+T2 est de l'ordre de 10ms.
■ exécution de la partie "Initialisation" (définition des variables, adressage des piles et des registres,etc) du programme simulant le circuit synchrone d'une carte authentique. Ce temps T3 est égal au nombre d'instructions d'initialisation nécessaires multiplié par le temps d'exécution d'une instruction (1µs environ). Pour une initialisation de 30 instructions par exemple le temps T3 est de l'ordre de 30 µs.

On remarquera que le temps de mise sous tension total T1+T2+T3 est au moins égal à 10ms, sensiblement plus long que le temps T0 de 500ns pour un circuit synchrone.

Aussi, le procédé de détection de fraude selon l'invention consiste à appliquer sur une entrée du circuit électronique 11 de la carte 10 un signal si d'excitation après un temps de 500ns au moins, mais inférieur à 10ms. Sur la broche I/O (Entrée / Sortie) du circuit 11, on enregistre le motif M de réponse au signal si d'excitation. Ledit motif M de réponse est ensuite comparé à un motif Mo de référence stocké en mémoire dans le lecteur 20 et correspondant à la réponse attendue du circuit électronique au signal si d'exitation.

Si le motif M de réponse est identique au motif Mo attendu, on en conclut à l'absence de simulateur actif, car dans le cas contraire la réponse aurait été différente du fait que le circuit asychrone de la carte frauduleuse n'aurait pas eu le temps d'être opérationnel.

En conclusion, une comparaison négative entre les moifs M et Mo permet de conclure à la fraude au moyen d'un simulateur actif.

## Revendications

1. Procédé de détection de fraude par un circuit asynchrone d'une carte (10) à circuit électronique synchrone présentant un temps (T0) de mise sous tension donné, caractérisé en ce que ledit procédé consiste à appliquer au circuit électronique (11) de ladite carte (10), dès sa mise sous tension, un signal (si) d'excitation donné, à enregistrer un motif (M) de réponse fourni par le circuit (11), à comparer ledit motif (M) de réponse à un motif (Mo) de référence correspondant à la réponse attendue du circuit électronique (11) audit signal (si) d'excitation, et à conclure à la fraude par un circuit asynchrone en cas de comparaison négative.
